# FASCICULE DE BREVET EUROPEEN

(11) **EP 4 249 212 B1**
(45) Date de publication et mention de la délivrance du brevet: **04.09.2024**
(21) Numéro de dépôt: 23156504.5
(22) Date de dépôt: 14.02.2023
(51) Int. Cl.: B29C 49/64, B29C 49/06, B29K 67/00, B29L 31/00

(54) **STATION DE CHAUFFAGE DE PREFORMES COMPORTANT UN MOYEN DE MISE EN ROTATION DES PREFORMES AU-DELA D'UNE ZONE DE CHAUFFAGE**
VORFORMHEIZSTATION MIT MITTELN ZUM DREHEN VON VORFORMEN MIT EINER HEIZZONE
PREFORM HEATING STATION COMPRISING MEANS FOR ROTATING PREFORMS BEYOND A HEATING ZONE

(30) Priorité: 21.03.2022 FR 2202469
(43) Date de publication de la demande: 27.09.2023
(73) Titulaire: Sidel Participations, 76930 Octeville-sur-Mer (FR)
(72) Inventeur: CHOMEL, Nicolas, 76930 Octeville-sur-Mer (FR)
(74) Mandataire: Sidel Group

(56) Documents cités:
- WO-A2-2011/001358
- DE-A1- 102016 005 272
- US-A- 5 853 775
- US-A1- 2022 032 528

## Description

### Domaine technique de l'invention

L'invention se rapporte à une station de chauffage de préformes pour une installation de production de récipients par formage desdites préformes, la station de chauffage comportant :
- un dispositif de convoyage des préformes en file d'amont en aval le long d'un trajet de convoyage, le dispositif de convoyage comportant des navettes indépendantes les unes des autres, chaque navette comportant au moins un organe de préhension d'une préforme monté rotatif sur ladite navette ;
- au moins un organe flexible sans fin dont un brin actif s'étend le long du trajet de convoyage, un tronçon de chauffage du brin actif étant en prise avec un pignon de chaque navette pour entraîner un organe de préhension associé en rotation lors de son déplacement le long de la zone de chauffage ;
- l'organe flexible sans fin tournant de manière que le brin actif se déplace vers l'aval.

Une station de chauffage de préformes et un procédé apparenté et selon l'art antérieur sont décrits dans les documents US5853775A, DE102016005272A1, WO2011/001358A2 et US2022/032528A1.

### Arrière-plan technique

Il est connu de réaliser des récipients en matériau thermoplastique par déformation d'une préforme dans une installation de production de récipients.

Les préformes présentent généralement un corps sensiblement cylindrique de révolution à paroi tubulaire épaisse qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme, préalablement chauffé, est destiné à subir une déformation relativement importante pour le conformer en récipient lors d'une étape de formage.

L'installation de production comporte une station de chauffage qui permet, lors d'une étape préalable de chauffage, de rendre malléable le corps de la préforme par chauffage au-delà d'une température de transition vitreuse. A cet effet, la station de chauffage comporte des émetteurs de chauffage qui émettent des radiations chauffantes et qui sont agencés dans une zone de chauffage.

Ensuite, lors de l'étape de formage, la préforme ainsi chauffée est placée dans un moule d'une station de formage qui présente une empreinte de moulage conforme au récipient à obtenir. Un fluide sous pression, tel que de l'air, est alors injecté dans le corps malléable de la préforme afin d'en plaquer la paroi contre l'empreinte du moule. La préforme peut aussi subir une déformation par étirage lors de cette étape de formage. La préforme est ainsi conformée en récipient par un étirage bi-axial, notamment par étirage-soufflage.

Tout au long de leur trajet à travers l'installation de production, les préformes sont prises en charge individuellement par des dispositifs de convoyage. Le dispositif de convoyage de la station de chauffage comportent des organes de préhension dont chacun est destiné à saisir le col d'une préforme. L'organe de préhension permet ainsi de faire circuler la préforme dans la station de chauffage. L'organe de préhension permet de faire tourner la préforme autour de son axe principal lors de son déplacement le long du trajet afin de permettre d'exposer la totalité du corps de la préforme au rayonnement chauffant. La préforme ainsi chauffée est ensuite transférée à une roue de transfert suivante.

Traditionnellement, pour produire des récipients axisymétriques, le corps de la préforme est chauffé de manière homogène lors de l'étape de chauffage. De ce fait, il subit une expansion qui est homogène dans toutes les directions radiales. La position angulaire de la préforme par rapport au moule qui la reçoit est donc sans importance.

Pour obtenir un récipient de section non symétrique de révolution à paroi d'épaisseur homogène par soufflage ou étirage-soufflage, il est connu de chauffer certaines portions angulaires du corps de la préforme à une température supérieure à d'autres portions angulaires de la préforme. Un tel procédé, appelé couramment "procédé de chauffe préférentielle", permet de conférer aux portions plus chaudes des caractéristiques mécaniques permettant un étirage, notamment circonférentiel, plus rapide par rapport aux portions moins chaudes.

La forme et la répartition des portions angulaires plus chaudes définissent un profil de chauffage de la préforme. Le profil de chauffage est adapté en fonction de la forme du récipient final à obtenir.

Pour obtenir un récipient satisfaisant, il est nécessaire d'indexer la position angulaire de la préforme chaude autour de son axe principal par rapport au moule afin d'orienter correctement le profil de chauffe préférentielle par rapport à l'empreinte du moule. Cependant, lorsque la vitesse de défilement des préformes est très élevée, les préformes subissent une rotation involontaire et aléatoire après leur chauffage. Ceci est notamment dû au fait que les organes de préhension sont libres en rotation sur au moins une partie de trajet après le passage des préformes dans la zone de chauffage.

Ce problème oblige à insérer des moyens supplémentaires d'indexation angulaire de la préforme après son chauffage et avant son formage. Une telle solution est donc complexe et onéreuse.

En outre, les moyens d'indexation angulaire existants sont un frein à l'augmentation de la vitesse de défilement des préformes. Par exemple dans le cas de dispositifs mettant en oeuvre une caméra thermique, la vitesse de défilement des préformes est limitée par le temps d'acquisition de l'image de la caméra. Selon encore un autre exemple, dans le cas d'un moyen d'indexation mécanique, par exemple à base de leviers et de galets liés à l'organe de préhension, une vitesse trop élevée risque d'aller au-delà des limites mécaniques du moyen d'indexation et ainsi d'user prématurément les éléments de contact et de causer ainsi des arrêts fréquents de l'installation de production.

Il existe donc un besoin pour orienter les préformes qui soit simple, peu onéreux et qui ne limitent pas la vitesse de défilement des préformes.

### Résumé de l'invention

L'invention propose une station de chauffage de préformes pour une installation de production de récipients par formage desdites préformes, la station de chauffage comportant :

- un dispositif de convoyage des préformes en file d'amont en aval le long d'un trajet de convoyage, le dispositif de convoyage comportant des navettes indépendantes les unes des autres circulant en file sur une voie commune, chaque navette comportant au moins un organe de préhension d'une préforme monté rotatif sur ladite navette ;
- le trajet de convoyage comportant une zone de chauffage le long de laquelle les préformes sont exposées à des radiations chauffantes émises par des émetteurs de chauffage, et le trajet de convoyage comportant une zone de sortie agencée directement en aval de la zone de chauffage, les préformes se déplaçant le long de la zone de sortie étant sensiblement hors de portée des émetteurs de chauffage ;
- au moins un organe flexible sans fin dont un brin actif s'étend le long du trajet de convoyage, un tronçon de chauffage du brin actif étant en prise avec un pignon de chaque navette pour entraîner l'au moins un organe de préhension associé en rotation lors de son déplacement le long de la zone de chauffage
- l'organe flexible sans fin tournant de manière que le brin actif se déplace vers l'aval.

La station de chauffage selon l'invention est caractérisée en ce que le brin actif de chaque organe flexible sans fin comporte un tronçon d'extrémité aval, dit tronçon de sortie, qui s'étend le long de la zone de sortie de manière à être en prise avec le pignon tout au long de la zone de sortie, de manière à pouvoir stopper la rotation de l'organe de préhension dans la zone de sortie en commandant le déplacement de la navette à la même vitesse que le brin actif.

Selon une autre caractéristique de la station de chauffage selon l'invention, le brin actif de l'organe flexible sans fin est en prise continûment avec le pignon entre une extrémité amont de la zone de chauffage et une extrémité aval de la zone de sortie.

Selon une autre caractéristique de la station de chauffage selon l'invention, la station de chauffage comporte deux organes flexibles sans fin dont les brins actifs s'étendent parallèlement, chaque brin actif comportant un tronçon de sortie s'étendant dans la zone de sortie.

Selon une autre caractéristique de la station de chauffage selon l'invention, chaque navette comporte deux organes de préhension, chaque organe de préhension étant commandé en rotation par un pignon associé, les pignons de la navette étant décalés transversalement, en référence au sens de déplacement de la navette, l'un par rapport à l'autre, chaque pignon étant en prise chacun avec un brin actif associé.

Selon une autre caractéristique de la station de chauffage selon l'invention, l'un des pignons de la navette, dit pignon aval, est décalés vers l'aval par rapport à l'autre des pignons de ladite navette, dit pignon amont.

Selon une autre caractéristique de la station de chauffage selon l'invention, une extrémité aval du brin actif qui coopère avec le pignon amont est décalée vers l'aval par rapport l'extrémité aval du brin actif qui coopère avec le pignon aval de sorte que le pignon amont soit toujours en prise avec une portion d'extrémité aval du brin associé lorsque le pignon aval n'est plus en prise avec son brin actif associé.

L'invention concerne aussi un procédé d'orientation des préformes mettant en oeuvre la station de chauffage réalisé selon les enseignements de l'invention, caractérisé en ce que le brin actif de chaque organe flexible sans fin est commandé de manière à se déplacer à une vitesse constante, dite vitesse de référence, chaque navette étant commandée de manière à se déplacer à ladite vitesse constante de référence sur une portion d'extrémité aval du brin actif associé afin de stopper la rotation de l'organe de préhension pendant que le pignon associé est encore en prise avec son brin actif, jusqu'à ce que le pignon soit libéré de son brin actif.

Selon une autre caractéristique du procédé d'orientation selon l'invention, chaque navette se déplace à une vitesse constante, dite vitesse de croisière, supérieure à la vitesse de référence le long du tronçon de chauffage pour assurer une rotation régulière des organes de préhension dans la zone de chauffage.

Selon une autre caractéristique du procédé d'orientation selon l'invention, chaque navette est commandée à une vitesse maximale supérieure à la vitesse de croisière lorsque son pignon est en prise avec une portion amont du tronçon de sortie afin d'augmenter la distance entre ladite navette et la navette immédiatement suivante sur la voie commune, ladite distance étant suffisante pour empêcher la navette suivante de percuter la navette circulant à la vitesse de référence sur la portion d'extrémité aval du tronçon de sortie.

Selon une autre caractéristique du procédé d'orientation selon l'invention, la portion amont est directement adjacente à la portion d'extrémité aval du tronçon de sortie.

### Brève description des figures

D'autres caractéristiques et avantages de l'invention apparaitront au cours de la lecture de la description détaillée qui va suivre pour la compréhension de laquelle on se reportera aux dessins annexés qui sont décrits succinctement par la suite.
La [Fig.1] est une vue de dessus qui représente schématiquement une installation de production de récipient comportant notamment une station de chauffage réalisée selon les enseignements de l'invention.
La [Fig.2] est une vue en coupe axiale qui représente une préforme susceptible d'être chauffée puis formée par l'installation de la [Fig.1] pour produire un récipient.
La [Fig.3] est une vue de dessus qui représente en détail un tunnel de chauffage de la station de chauffage de la [Fig.1] dans lequel circule des navettes et qui comporte un dispositif de mise en rotation des préformes réalisé selon un premier mode de réalisation de l'invention.
La [Fig.4] est une vue en perspective qui représente un dispositif de convoyage qui équipe la station de chauffage de la [Fig.1] et qui comporte une navette indépendante portant une préforme.
La [Fig.5] est une vue en coupe selon le plan de coupe 5-5 de la [Fig.4] qui représente le dispositif de convoyage portant une préforme circulant dans le tunnel de chauffage.
La [Fig.6] est une vue en coupe transversale selon le plan de coupe 6-6 de la [Fig.2] qui représente un exemple de profil de chauffe préférentielle de la préforme de la [Fig.2] après son passage dans le tunnel de chauffage.
La [Fig.7] est un diagramme qui représente la vitesse d'une navette, en ordonnée, en fonction de sa position le long de son trajet de convoyage, en abscisse, lors de la mise en oeuvre d'un procédé d'orientation angulaire de la préforme réalisé selon un premier mode de réalisation de l'invention qui est appliqué à la station de chauffage représentée à la [Fig.3].
La [Fig.8] est un diagramme qui représente l'écart d'une première navette par rapport à la navette immédiatement suivante, en ordonnée, en fonction de sa position le long de son trajet de convoyage, en abscisse, lorsque les navettes sont commandées selon le diagramme de la [Fig.7], l'abscisse du diagramme de la [Fig.8] étant agencée en coïncidence avec l'abscisse du diagramme de la [Fig.7].
La [Fig.9] est une vue de dessus similaire à celle de la [Fig.3] qui représente le tunnel de chauffage réalisé selon un deuxième mode de réalisation de l'invention dans lequel il comporte deux organes flexibles sans fin et dans lequel chaque navette porte deux préformes, les deux préformes étant liées en rotation avec leur organe flexible sans fin associé.
La [Fig.10] est une vue similaire à celle de la [Fig.9] dans lequel la navette est plus avancée le long de son trajet de convoyage, seule une préforme étant encore liée en rotation avec son organe flexible sans fin associé.
La [Fig.11] est un diagramme similaire à celui de la [Fig.7] qui représente la vitesse de chaque navette lors de la mise en oeuvre d'un procédé d'orientation angulaire de la préforme réalisé selon un deuxième mode de réalisation de l'invention qui est appliqué à la station de chauffage représentée aux figures 9 et 10.

### Description détaillée de l'invention

Dans la suite de la description, des éléments présentant une structure identique ou des fonctions analogues seront désignés par une même référence.

Dans la suite de la description, on adoptera à titre non limitatif une orientation longitudinale dirigée parallèlement au sens de déplacement des préformes 12 le long de la zone de chauffage et de la zone de sortie, une orientation transversale dirigée orthogonalement à la direction longitudinale et à l'axe des préformes, et une orientation verticale dirigée parallèlement à l'axe principal des préformes, les orientations étant indiquées par le trièdre "L,V,T" des figures. L'orientation verticale est ici utilisée à titre de repère géométrique sans rapport avec la direction de la gravité terrestre.

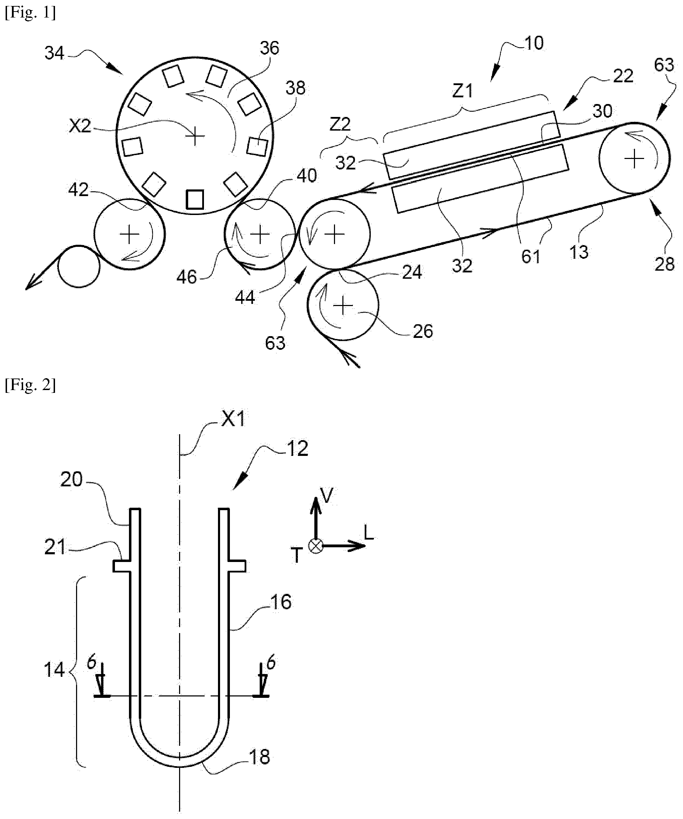

On a représenté schématiquement à la [Fig.1] une installation 10 de production en série de récipients en matériau thermoplastique à partir de préformes 12.

Dans la suite de la description, les préformes 12 se déplacent dans l'installation 10 de production le long d'un itinéraire 13 de production depuis l'amont vers l'aval. L'itinéraire 13 de production est représenté par un trait gras à la [Fig.1]. Les préformes 12 sont déplacées en file le long de l'itinéraire 13 de production par des moyens de convoyage qui seront détaillés par la suite.

De manière non limitative, les récipients sont ici des bouteilles. Le matériau thermoplastique est ici formé par du polyéthylène téréphtalate, désigné par la suite sous son acronyme "PET".

On a représenté à la [Fig.2] un exemple d'une telle préforme 12. La préforme 12 présente un axe "X1" principal représenté verticalement à la [Fig.2]. Elle présente un corps 14 cylindrique à paroi 16 tubulaire qui comporte à l'une de ses extrémités axiales un fond 18 fermé, représenté ici au bas de la figure. La préforme 12 est ouverte à son autre extrémité par un col 20, lui aussi tubulaire, qui débouche à l'intérieur du corps 14. A sa base, le col 20 présente ici une collerette 21.

Le col 20 présente généralement sa forme définitive tandis que le corps 14 de la préforme 12 est destiné à subir un étirage, notamment un étirage bi-axial, pour former le récipient final lors d'une étape de formage.

En se reportant à la [Fig.1], l'installation 10 de production réalisée selon l'état de la technique comporte une station 22 de chauffage des préformes 12.

Les préformes 12 sont acheminées en file jusqu'à un point 24 d'entrée de la station 22 de chauffage par une roue 26 de transport rotative. Il s'agit généralement d'une roue 26 comportant des encoches (non représentées) à sa périphérie, dite "roue à encoches". Chaque encoche reçoit le corps 14 de la préforme 12, le poids de la préforme 12 étant supporté par sa collerette 21 qui repose sur le pourtour de l'encoche.

Au point 24 d'entrée, les préformes 12 sont prises en charge individuellement par un dispositif 28 de convoyage de la station 22 de chauffage qui sera décrit plus en détails par la suite.

A titre d'exemple non limitatif, la station 22 de chauffage comporte au moins un tunnel 30 de chauffage dans lequel sont agencés des émetteurs 32 de chauffage émettant un rayonnement électromagnétique chauffant, par exemple un rayonnement infrarouge. L'itinéraire 13 des préformes 12 traverse le tunnel 30 de chauffage. Plus particulièrement, le tunnel 30 de chauffage est traversé par un tronçon rectiligne de l'itinéraire 13 des préformes 12.

Ces émetteurs 32 de chauffage ont pour fonction de chauffer le corps 14 des préformes 12 au-delà d'une température de transition vitreuse pour les rendre suffisamment malléable en vue de leur formage. Le corps 14 des préformes 12 doit cependant demeurer à une température inférieure à une température de cristallisation.

Dans l'exemple représenté à la [Fig.1], l'installation 10 de production comporte des émetteurs 32 de chauffage formés par des émetteurs laser. Le rayonnement chauffant émis par de tels émetteurs 32 de chauffage pénètre généralement profondément dans l'épaisseur de la paroi 16. Il en résulte que les préformes 12 n'ont pas besoin d'une durée d'exposition très longue. L'installation 10 de production de la [Fig.1] comporte donc un unique tunnel 30 de chauffage. De tels émetteurs 32 de chauffage ne requièrent pas l'agencement de moyens de ventilation car le risque de surchauffe de la préforme 12 est faible voire nul. Il est donc possible d'agencer des émetteurs 32 de chauffage des deux côtés du tunnel 30 de chauffage.

En variante non représentée de l'invention, les émetteurs de chauffage sont formés par des lampes halogènes. Dans ce cas, la station de chauffage comporte généralement deux tunnels de chauffage agencés en série pour que les préformes puissent bénéficier d'un temps d'exposition suffisant au rayonnement chauffant. De tels émetteurs de chauffage nécessitent l'agencement de moyens de ventilation pour éviter une surchauffe de la paroi 16 extérieure des préformes.

A leur sortie du tunnel 30 de chauffage, le corps 14 des préformes 12 est rendu malléable par chauffage au-delà d'une température de transition vitreuse, tandis que le col 20 est maintenu à une température suffisamment basse pour conserver sa forme d'origine.

L'installation 10 de production comporte aussi une station 34 de formage des préformes 12 ainsi chauffées. La station 34 de formage est agencée en aval de la station 22 de chauffage en référence au flux de préformes 12 dans l'installation 10 de production.

La station 34 de formage comporte ici un carrousel 36 rotatif autour d'un axe "X2" portant une pluralité d'unités 38 de formage. Chaque unité 38 de formage est susceptible de déplacer les préformes 12 autour de l'axe "X2" du carrousel 36 entre un point 40 de chargement des préformes 12 et un point 42 de déchargement des récipients finaux de reprendre un nouveau cycle.

Chaque unité 38 de formage comporte généralement un moule (non représenté) dans lequel au moins une préforme 12 est destinée à être reçue, et des moyens de formage (non représentés). Les moyens de formage sont généralement formés par une tuyère qui est apte à injecter un fluide sous pression, notamment de l'air, dans les préformes 12 reçues dans les moules. Pour permettre d'obtenir une bonne répartition du matériau thermoplastique dans les récipients finaux, les moyens de formage comportent une tige d'étirage qui est destinée à être insérée à l'intérieur de la préforme 12 pour provoquer son étirage dans un sens axial par contact avec le fond 18.

L'installation 10 de production comporte généralement des moyens de transport pour convoyer les préformes 12 chaudes le long d'une partie de leur itinéraire 13 depuis un point 44 de sortie de la station 22 de chauffage jusqu'au point 40 de chargement dans une unité 38 de formage de la station 34 de formage.

A titre d'exemple non limitatif, de tels moyens de transport comportent une roue 46 de transfert. La roue 46 de transfert est munie à sa périphérie de pinces (non représentées) qui sont aptes à saisir chaque préforme 12 par leur col 20.

Comme annoncé précédemment, la station 22 de chauffage comporte aussi un dispositif 28 de convoyage des préformes 12 en file d'amont en aval sur une partie de leur itinéraire 13. Le dispositif 28 de convoyage est agencé de manière à les faire défiler le long d'un trajet de convoyage qui s'étend du point 24 d'entrée jusqu'au point 44 de sortie. Le trajet de convoyage passe notamment à travers le tunnel 30 de chauffage. Le sens de défilement des préformes 12 est indiqué par les flèches de la [Fig.1].

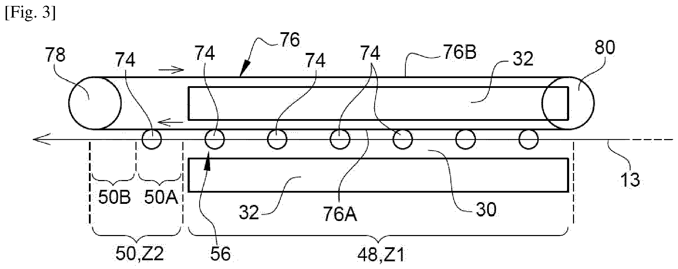

Comme représenté plus en détail à la [Fig.3], le trajet de convoyage comporte une zone "Z1" de chauffage le long de laquelle le corps 14 des préformes 12 est exposé aux radiations chauffantes émises par des émetteurs 32 de chauffage.

Le trajet de convoyage comporte aussi une zone "Z2" de sortie du tunnel 30 de chauffage qui est agencée directement en aval de la zone "Z1" de chauffage. Le corps 14 des préformes 12 traversant la zone "Z2" de sortie est sensiblement hors de portée des émetteurs 32 de chauffage. Ainsi, les préformes 12 ne subissent pas de chauffage lorsqu'elles sont dans la zone "Z2" de sortie. Ces zones "Z1" et "Z2" sont aussi visibles à la [Fig. 1].

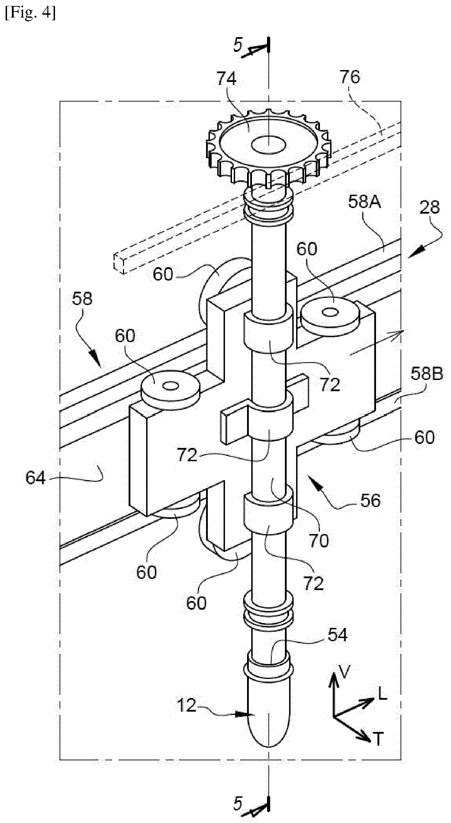

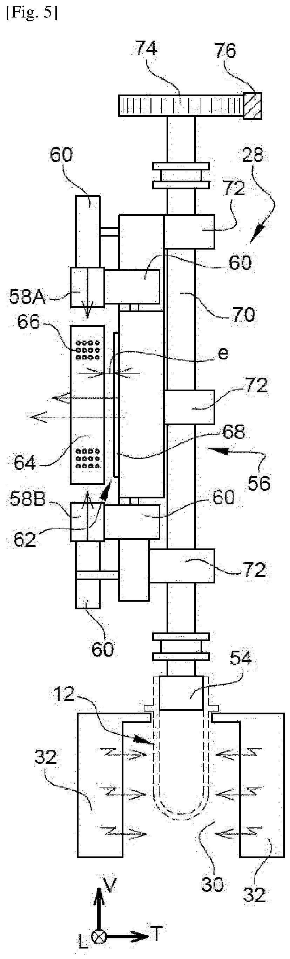

En se reportant à la [Fig.4], le dispositif 28 de convoyage comporte des organes 54 de préhension dont chacun est apte à saisir individuellement une préforme 12, généralement par son col 20. Un tel organe 54 de préhension est par exemple formé par un mandrin qui est inséré à l'intérieur du col 20 de la préforme 12 puis serré par expansion radiale, comme cela est représenté à la [Fig.5].

Le dispositif 28 de convoyage comporte ainsi plusieurs navettes 56 indépendantes les unes des autres. Chaque navette 56 comporte au moins un organe 54 de préhension.

Le dispositif 28 de convoyage comporte une voie 58 de guidage commune à toutes les navettes 56 le long de laquelle elles circulent en une file. La voie de guidage est ici formée par une paire de rails 58A, 58B de guidage des navettes 56. Les navettes 56 sont guidées par contact avec les rails 58A, 58B de guidage, par exemple par roulement de galets 60 portés par les navettes 56 sur des chemins de guidage des rails 58A, 58B de guidage.

Les organes 54 de préhension circulent ainsi en file le long d'une boucle fermée. Comme illustré à la [Fig.1], la boucle présente ici deux portions 61 rectilignes parallèles. Les portions rectilignes sont jointes par deux portions 63 de virage à 180°.

Le point 24 d'entrée est situé sur une portion 63 de virage de la boucle du dispositif 28 de convoyage. Le point 44 de sortie de la station 22 de chauffage est ici situé dans la même portion 63 de virage de la boucle que le point 24 d'entrée. Depuis le point 44 de sortie jusqu'au point 24 d'entrée, les navettes 56 se déplacent à vide, c'est-à-dire qu'elles ne transportent aucune préforme 12.

Le tunnel 30 de chauffage est ici agencé sur une portion 61 rectiligne de la boucle fermée. La zone "Z1" de chauffage s'étend ainsi le long d'un tronçon rectiligne du trajet de convoyage. La zone "Z2" de sortie est aussi agencée sur la même portion 61 rectiligne de la boucle fermée que la zone "Z1" de chauffage, selon une droite qui prolonge la zone "Z1" de chauffage.

Le dispositif 28 de convoyage comporte au moins un moteur 62 linéaire pour commander le déplacement de chaque navette 56 de manière indépendante les unes des autres. Un exemple de réalisation d'un tel moteur 62 linéaire est représenté à la [Fig.5].

Le moteur 62 linéaire comporte une voie 64 magnétique qui est agencée le long des rails 58A, 58B. La voie 64 magnétique forme un stator comportant une série de bobinages 66 qui sont répartis le long de la voie 64 magnétique. Chaque bobinage 66 est commandé individuellement pour induire localement un champ magnétique de manière indépendante des autres bobinages 66. Les bobinages 66 sont par exemple commandés par une unité électronique de commande (non représentée) qui est programmée de manière appropriée.

Le moteur 62 linéaire comporte ainsi un seul stator, formé par la voie 64 magnétique, et plusieurs navettes 56 commandées indépendamment le long dudit stator.

En outre, chaque navette 56 embarque un aimant 68. Il s'agit ici d'un aimant permanent, mais en variante, il peut aussi s'agir d'un électroaimant. L'aimant 68 est agencé à faible distance de la voie 64 magnétique, selon une direction orthogonale à la direction longitudinale "L" de déplacement des navettes 56. Cette faible distance est ici appelée entrefer "e".

En commandant de manière appropriée les bobinages 66 de la voie 64 magnétique, un champ magnétique est localement créé pour produire par interaction avec l'aimant 68 une force magnétique de déplacement de chaque navette 56 le long des rails 58A, 58B. En ce cas, il est possible de commander individuellement les déplacements de chaque navette 56 le long de la voie 64 magnétique.

La voie 58 de guidage et la voie 64 magnétique sont ici agencées verticalement au-dessus du tunnel 30 de chauffage dans l'exemple représenté à la [Fig.5].

Pendant leur passage dans la station 22 de chauffage, les préformes 12 sont animées d'un mouvement de rotation propre autour de leur axe "X1" principal afin de pouvoir exposer toute leur circonférence au rayonnement chauffant émis par les émetteurs 32 de chauffage. A cette fin, chaque organe 54 de préhension est monté rotatif sur la navette 56 associée autour d'un axe coïncidant avec l'axe "X1" principal de la préforme 12 qu'il porte. Plus particulièrement, chaque organe 54 de préhension est en rotation libre par rapport à la navette 56.

Dans l'exemple représenté aux figures, chaque organe 54 de préhension est agencée à l'extrémité inférieure d'un arbre 70 d'axe "X1" principal qui est monté rotatif sur la navette 56 par l'intermédiaire de paliers 72 de guidage.

La mise en rotation de l'organe 54 de préhension est ici effectuée au moyen d'un pignon 74 qui est embarqué sur la navette 56 et qui est lié en rotation avec l'organe 54 de préhension. Le pignon 74 est ici fixé à une extrémité supérieure de l'arbre 70.

La station 22 de chauffage comporte au moins un organe 76 flexible sans fin dont un brin 76A actif s'étend le long d'une partie du trajet de convoyage associé, plus particulièrement le long de la zone "Z1" de chauffage et le long de la zone "Z2" de sortie. Le brin 76A actif est en prise avec un pignon 74 de chaque navette 56 pour entraîner un organe 54 de préhension associé en rotation lors de son déplacement à travers la zone "Z1" de chauffage. Le terme "en prise" signifie que le pignon 74 est au contact du brin 76A actif de manière qu'un déplacement relatif du pignon 74 par rapport au brin 76A actif provoque la rotation du pignon 74.

Le brin 76A actif est plus particulièrement divisé en un tronçon 48 de chauffage qui s'étend le long de la zone "Z1" de chauffage et en un tronçon 50 de sortie qui s'étend le long de la zone "Z2" de sortie. Le tronçon 50 de sortie forme un tronçon d'extrémité aval du brin 76A actif. Le tronçon 50 de sortie est ici immédiatement adjacent au tronçon 48 de chauffage. En outre le tronçon 48 de chauffage forme ici un tronçon d'extrémité amont du brin 76A actif. Le pignon 74 est en prise avec le tronçon 48 de chauffage lorsque la préforme se déplace sur toute la longueur de la zone "Z1" de chauffage. Le pignon 74 est en prise avec le tronçon 50 de sortie lorsque la préforme se déplace le long de la zone "Z2" de sortie.

L'organe 76 flexible sans fin est par exemple formé par une courroie ou par une chaîne.

Dans l'exemple représenté aux figures, l'organe 76 flexible sans fin comporte des crans (non représentés) qui engrènent avec des dents du pignon 74 lorsque le brin 76A actif est en prise avec le pignon 74. En variante non représentée, le pignon 74 peut aussi être en prise avec le brin 76A actif par frottement.

En outre, l'organe 76 flexible sans fin est monté pour tourner de manière que son brin 76A actif se déplace vers l'aval. A cet effet, l'organe 76 flexible sans fin est agencé autour d'au moins une roue 78 menante et une roue 80 menée. La roue 78 menante est entraînée par un moteur, tandis que la roue 80 menée est elle-même entraînée en rotation par l'organe 76 flexible sans fin, dans un sens horaire en se référant à la [Fig.3] . La roue 78 menante tourne ici de manière que le brin 76A actif se déplace vers l'aval. Pour garantir que le brin 76A actif soit bien tendu, la roue 78 menante est ici agencée à l'extrémité aval du brin 76A actif, tandis que la roue 80 menée est agencée à l'extrémité amont du brin 76A actif. Pour tendre l'autre brin 76B, dit passif, il est possible d'utiliser un galet tendeur (non représenté).

Cet agencement garantit que les préformes 12 continuent à tourner même en cas d'arrêt de leur défilement dans le tunnel 30 de chauffage. Cela évite ainsi que les préformes 12 ne soient endommagées trop rapidement en cas d'arrêt très bref.

De préférence, l'organe 76 flexible sans fin tourne à une vitesse constante, dite vitesse "V0" constante de référence. Ainsi, la position angulaire et la vitesse de rotation de chaque préforme 12 peut être connue avec précision en fonction de la position et de la vitesse de déplacement de la navette 56 le long du trajet de convoyage.

Lorsque le récipient à obtenir présente une forme axisymétrique, le corps 14 de chaque préforme 12 est chauffé de manière homogène.

Cependant, le récipient final peut aussi présenter une forme non axisymétrique. En ce cas, certains secteurs angulaires du corps 14 de la préforme 12, pris autour de l'axe "X1" principal de la préforme 12, sont destinés à être plus étirés que d'autres dans la station 34 de formage. On comprend donc que la répartition de la matière n'est pas réalisée uniformément autour de l'axe "X1" principal du récipient final pendant l'opération de formage.

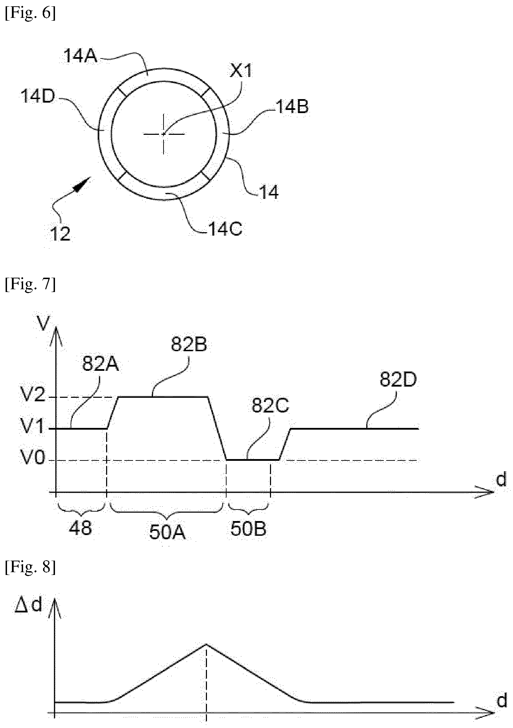

A cet égard, les différents secteurs angulaires du corps 14 de la préforme 12 sont déformés de manière différenciée pendant l'opération de formage. Ces différents secteurs angulaires du corps 14 de la préforme 12 nécessitent donc un chauffage à des températures différentes en fonction de l'élasticité et/ou de la viscosité souhaitée lors de l'opération de formage. Le chauffage des préformes 12 selon un tel profil de températures est généralement connu sous le terme de "chauffe préférentiel", et la température est distribuée selon un "profil de chauffe préférentielle" dans le corps 14 de la préforme 12. On a représenté à la [Fig.6] un exemple de profil de chauffe préférentielle dans lequel le corps 14 de la préforme 12 a été divisé en quatre secteurs 14A, 14B, 14C, 14D angulaires. Dans l'exemple représenté, les secteurs 14A, 14C angulaires opposés sont chauffés à une première température supérieure ou égale à la température de transition vitreuse, tandis que les deux autres secteurs 14B, 14D angulaires sont chauffés à une deuxième température supérieure à la première température.

Pour obtenir un tel profil de chauffe préférentielle, il est avantageux d'utiliser le tunnel 30 de chauffage tel que décrit précédemment sans qu'il ne soit nécessaire d'ajouter de dispositifs de chauffage spécifiques pour la chauffe préférentielle en aval. Pour réaliser un tel profil de chauffe préférentielle pendant que les préformes 12 sont animées d'un mouvement de rotation propre, il est possible d'agir sur la position transversale et/ou sur la puissance émise de certains émetteurs 32 le long de la zone "Z1" de chauffage pour réguler la puissance de chauffage émise sur certains secteurs angulaires spécifiques de la préforme 12. En effet, comme expliqué précédemment, tant que les pignons 74 sont en prise avec le brin 76A actif, la position angulaire de chaque préforme 12 est connue et maîtrisée. On sait donc sur quelles portions de la zone "Z1" de chauffage augmenter ou au contraire réduire la puissance de chauffage à laquelle les préformes 12 sont exposées pour obtenir le profil de chauffe préférentielle souhaité.

Généralement, chaque navette 56 se déplace à une vitesse constante, dite vitesse "V1" de croisière le long de la zone "Z1" de chauffage pour assurer une rotation régulière des organes 54 de préhension dans la zone "Z1" de chauffage par coopération entre le pignon 74 et le tronçon 48 de chauffage du brin 76A actif. Cela permet de maîtriser précisément le chauffage de chaque secteur angulaire de la préforme 12. La vitesse "V1" de croisière est ici supérieure à la vitesse "V0" constante de référence du brin 76A actif.

En variante non représentée de l'invention, la vitesse de circulation des navettes varie le long de la zone "Z1" de chauffage afin que la vitesse de rotation des navettes varie pour favoriser le chauffage de certains secteurs angulaires du corps 14 et obtenir ainsi le profil de chauffe préférentielle désiré. Cependant, cette variation de vitesse n'est pas entièrement libre, elle est contrainte par la durée d'exposition à laquelle chaque secteur angulaire de la préforme doit être soumise pour aboutir au profil de chauffe préférentielle. En outre, un tel procédé de chauffe préférentielle ne permet pas d'optimiser le rendement de la station de chauffage puisque les navettes doivent être écartées d'une distance suffisante pour permettre leurs décélérations et accélérations successives sans carambolage.

Pour obtenir un récipient de bonne qualité, il est nécessaire d'orienter correctement la préforme 12 ainsi chauffée par rapport au moule de l'unité 38 de formage pour faire correspondre le profil de chauffe préférentielle avec la forme de l'empreinte du moule.

Cependant, lorsque le pignon 74 n'est plus en prise avec le brin 76A actif, l'organe 54 de préhension redevient libre en rotation par rapport à la navette 56. Or, dans les stations de chauffage réalisées selon l'état de la technique, l'organe 54 de préhension demeure en rotation jusqu'à ce que la liaison entre le pignon 74 et le brin 76A actif soit interrompue. Lorsque l'organe 54 de préhension redevient libre en rotation, il continue donc à tourner sous l'effet de son moment d'inertie. La rotation de l'organe 54 de préhension finit éventuellement par s'arrêter sous l'effet de forces de frottement entre l'arbre 70 et ses paliers 72 de guidage de l'arbre 70 sur la navette 56. Cependant, l'organe 54 de préhension est arrêté dans une position angulaire aléatoire. La connaissance de la position angulaire de la préforme 12 est donc généralement perdue. Il est alors nécessaire de prévoir des moyens supplémentaires pour indexer à nouveau à la position angulaire de la préforme 12 dans une position angulaire indexée qui permettra de garantir un bon positionnement angulaire des préformes 12 dans leur moule.

Au contraire, l'invention propose de conserver la connaissance de la position angulaire de la préforme 12, et même de stopper la rotation de la préforme 12, et donc la rotation de son organe 54 de préhension, dans une position angulaire indexée déterminée, évitant ainsi d'avoir à recourir à des moyens d'indexation supplémentaires.

Selon un premier mode de réalisation de l'invention représenté à la [Fig.4], le brin 76A actif de chaque organe 76 flexible sans fin comporte un tronçon d'extrémité aval, dit tronçon 50 de sortie, qui s'étend dans la zone "Z2" de sortie de manière à rester en prise avec le pignon 74 de l'organe 54 de préhension le long de la zone "Z2" de sortie. Ainsi, la connaissance de la position angulaire de la préforme 12 demeure connue après sa sortie de la zone "Z1" de chauffage. En outre, l'intérêt de prolonger le brin 76A actif hors de la zone "Z1" de chauffage est qu'il est désormais possible de faire varier la vitesse de rotation de la préforme 12 indépendamment des contraintes de chauffage lors de son déplacement le long de la zone "Z2" de sortie.

Le brin 76A actif de l'organe 76 flexible sans fin est ici en prise continûment avec le pignon 74 entre une extrémité amont de la zone "Z1" de chauffage et une extrémité aval de la zone "Z2" de sortie. Ainsi, la connaissance de la position angulaire de la préforme 12 par rapport à la navette 56 couvre la totalité du temps d'exposition de la préforme 12 au rayonnement chauffant.

Pour permettre d'indexer correctement la préforme 12, et son organe 54 de préhension, angulairement autour de son axe "X1" principal sans recourir à des dispositifs supplémentaires agencés en aval, l'invention propose d'arrêter la rotation de l'organe 54 de préhension dans la position angulaire indexée de la préforme 12 avant que la liaison entre le pignon 74 et le brin 76A actif ne soit interrompue. Ainsi, l'organe 54 de préhension demeure dans la position angulaire qu'il occupait au moment où la liaison est rompue. Selon la loi de conservation du moment angulaire, l'organe 54 de préhension demeure immobile en rotation par rapport à la navette 56 autour de son axe "X1" principal lorsqu'il redevient libre en rotation.

Pour ce faire, on rappelle que le brin 76A actif se déplace vers l'aval à une vitesse "V0" constante de référence. Comme représenté par le plateau 82C à la [Fig.7], chaque navette 56 est commandée de manière à se déplacer à ladite vitesse "V0" constante de référence sur une portion 50B d'extrémité aval du tronçon 50 de sortie du brin 76A actif afin de stopper la rotation de l'organe 54 de préhension pendant que la pignon 74 associé est encore en prise avec le brin 76A actif associé, et ce jusqu'à ce que le pignon 74 de la navette 56 ne soit plus en prise avec le brin 76A actif. Le pignon 74 est alors libéré de son brin 76A actif alors que la rotation de l'organe 54 de préhension est déjà interrompue. La navette 56 peut alors être de nouveau accélérée à une vitesse supérieure, par exemple à sa vitesse "V1" de croisière, comme représenté par le plateau 82D de la [Fig.7], sans que cela ne provoque de rotation de l'organe 54 de préhension par rapport à la navette 56.

La vitesse "V1" de croisière de la navette 56 étant supérieure à la vitesse "V0" constante de référence, cette opération implique donc un ralentissement de la navette 56 le long de la zone "Z2" de sortie. Cependant, pour optimiser le rendement des émetteurs 32 de chauffage, il est préférable de faire circuler les navettes 56 au plus proche les unes des autres dans le tunnel 30 de chauffage. Un tel ralentissement est donc susceptible de provoquer des perturbations de la circulation des navettes 56, par exemple un carambolage ou un ralentissement des navettes 56 dans la zone "Z1" de chauffage.

Pour résoudre ce problème, chaque navette 56 est accélérée jusqu'à une vitesse "V2" maximale supérieure à la vitesse "V1" de croisière en entrant dans la zone "Z2" de sortie lorsque le pignon 74 est en prise une portion 50A amont du tronçon 50 de sortie. En référence à la [Fig.7], le plateau 82A correspond à la circulation de la navette 56 dans la zone "Z1" de chauffage à la vitesse "V1" de croisière, lorsque le pignon 74 est en prise avec le tronçon 48 de chauffage du brin 76A actif, c'est-à-dire lorsque la préforme 12 portée par ladite navette 56 circule dans la zone "Z1" de chauffage. Le plateau 82B correspond à la circulation de la navette 56 à la vitesse "V2" maximale lorsque le pignon 74 est en prise avec la portion 50A amont du tronçon 50 de sortie du brin 76A actif, c'est-à-dire lorsque la préforme 12 portée par ladite navette 56 circule dans la zone "Z2" de sortie.

La navette 56 immédiatement suivante subit les mêmes variations de vitesses avec un décalage dans le temps par rapport à la première navette 56 dont les variations de vitesses sont représentées à la [Fig.7].

Comme représenté à la [Fig.8], qui représente l'écartement longitudinal entre deux navettes 56 successives en fonction du temps, cette accélération permet d'augmenter la distance entre ladite navette 56 et la navette 56 immédiatement suivante sur la voie 58 de guidage commune lors de leur circulation le long du tronçon 50 de sortie. L'accélération est assez importante pour que ladite distance soit suffisante pour empêcher la navette 56 suivante de percuter la navette 56 circulant à la vitesse "V0" constante de référence lorsque le pignon 74 est en prise la portion 50B d'extrémité aval du tronçon 50 de sortie du brin 76A actif.

Le moteur 62 linéaire permet avantageusement de réaliser de telles accélérations sur une faible distance.

La portion 50A amont est directement adjacente à la portion 50B d'extrémité aval du tronçon 50 de sortie. Chaque navette 56 est ainsi successivement accélérée depuis la vitesse "V1" de croisière, comme indiqué par le plateau 82A, jusqu'à la vitesse "V2" maximale, comme indiqué par le plateau 82B, puis, lorsque la distance avec la navette 56 suivante est suffisante, la navette est ralentie jusqu'à la vitesse "V0" constante de référence lorsque le pignon 74 arrive dans la portion 50B d'extrémité aval du tronçon 50 de sortie, comme indiqué par le plateau 82C. Une fois que le pignon 74 n'est plus en prise avec le brin 76A actif, la navette 56 peut alors être à nouveau accélérée jusqu'à une vitesse supérieure, comme indiqué par le plateau 82D.

En outre, les valeurs d'accélération et de ralentissement doivent être sélectionnées non seulement pour garantir une distance suffisante entre la navette 56 sortante et la navette 56 immédiatement suivante, mais aussi pour garantir que la préforme 12 occupe une position angulaire indexée déterminée autour de son axe "X1" principal lorsque la navette 56 avance à la vitesse "V0" constante de référence, comme indiqué par le plateau 82C. Ainsi, le déplacement de la navette 56 le long de la portion 50A amont du tronçon 50 de sortie permet non seulement d'écarter la navette 56 de la navette 56 suivante, mais il permet aussi d'indexer la position angulaire de l'organe 54 de préhension. Cette position angulaire d'indexation est par exemple choisie pour que la préforme 12 soit introduite dans le moule correspondant avec son profil de chauffe préférentielle directement en coïncidence avec la forme de l'empreinte du moule.

La station 22 de chauffage ainsi réalisée et le procédé pour sa mise en oeuvre permettent d'orienter correctement les préformes 12 sans avoir recourt à des dispositifs d'indexation supplémentaire en aval.

En variante, la vitesse des navettes peut être commandée pour varier continûment sans que le plateau 82B ne soit marqué. Il est en revanche important de conserver le plateau 82C, correspondant à la circulation de la navette 56 à la vitesse "V0" de référence lorsque son pignon 74 est en prise avec la portion 50B d'extrémité aval du tronçon 50 de sortie pour garantir un arrêt de la rotation de l'organe 54 de préhension lorsque la liaison entre le pignon 74 et le brin 76A actif est rompue. La durée du plateau 82C doit être suffisamment longue pour garantir cet arrêt en rotation en prenant en compte les différents jeux de fonctionnement.

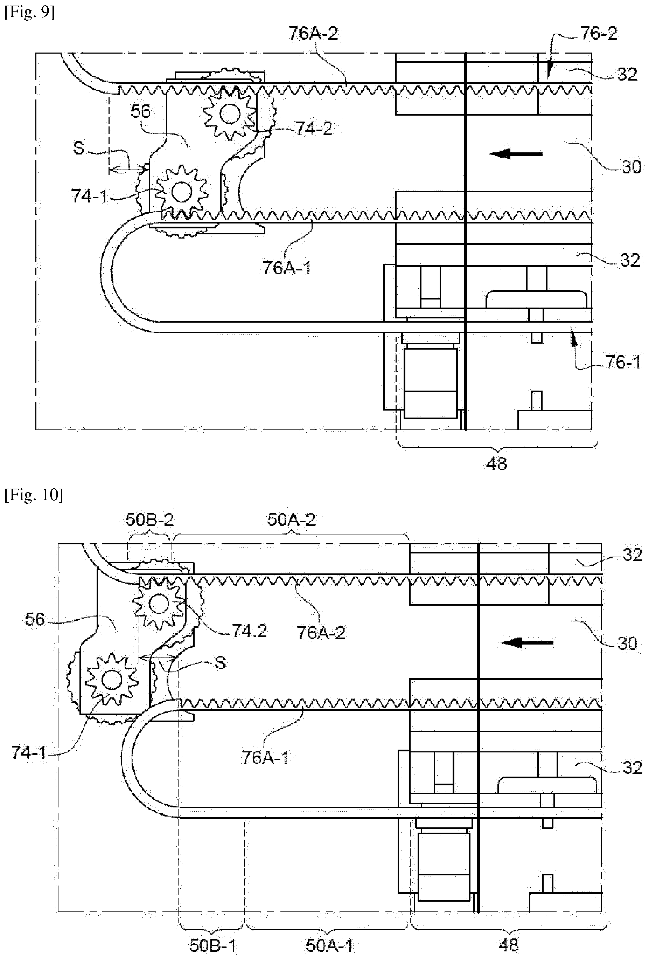

Selon un deuxième mode de réalisation de l'invention représenté aux figures 9 et 10, chaque navette 56 comporte deux organes 54 de préhension. Ainsi, chaque navette 56 peut transporter simultanément deux préformes 12.

Pour permettre d'optimiser le rendement des émetteurs 32 de chauffage, les organes 54 de préhension peuvent être décalés transversalement et/ou longitudinalement par rapport au sens de déplacement lorsque les navettes 56 circulent dans la zone "Z1" de chauffage et dans la zone "Z2" de sortie, de sorte que les préformes 12 destinées à être portées par ces organes 54 de préhension se déplacent en deux files de convoyage parallèles en quinconce le long du trajet de convoyage. Les deux files sont assez proches l'une de l'autre pour passer dans le même tunnel 30 de chauffage.

Chaque organe 54 de préhension est commandé indépendamment en rotation par un pignon 74 associé. L'un des pignons 74 de la navette 56, dit pignon 74-1 aval, est décalé vers l'aval par rapport à l'autre des pignons 74 de ladite navette 56, dit pignon 74-2 amont. Les deux pignons 74 de la navette 56 sont en outre décalés transversalement l'un par rapport à l'autre.

La station 22 de chauffage comporte ici deux organes 76-1, 76-2 flexibles sans fin dont les brins 76A actifs s'étendent parallèlement à un trajet de convoyage associé. Chaque organe 76-1, 76-2 flexible sans fin est agencé de manière identique à ce qui a été décrit en référence au premier mode de réalisation, transversalement de part et d'autre du tunnel 30 de chauffage. Les brins 76A-1, 76A-2 actifs des organes 76-1, 76-2 flexibles sans fin comportent chacun un tronçon 50 de sortie qui s'étend jusque dans la zone "Z2" de sortie. Les brins 76A-1, 76A-2 actifs s'étendent ici de part et d'autre du trajet de convoyage. Les deux brins 76A-1, 76A-2 actifs se déplacent à la même vitesse "V0" constante de référence.

Les pignons 74-1, 74-2 de la navette 56 étant décalés transversalement l'un par rapport à l'autre, chacun de ces pignons 74-1, 74-2 est en prise avec un des brins 76A-1, 76A-2 actifs associé.

Une extrémité aval du brin 76A-2 actif qui coopère avec le pignon 74-2 amont est décalée d'une distance "S" vers l'aval par rapport l'extrémité aval du brin 76A-1 actif qui coopère avec le pignon 74-1 aval de sorte que le pignon 74-2 amont soit toujours en prise avec la portion 50B-2 d'extrémité aval du brin 76A-2 actif associé lorsque le pignon 74-1 aval n'est plus en prise avec son brin 76A-1 actif associé, comme représenté à la [Fig.10].

Un tel agencement permet ainsi d'indexer la position angulaire de l'organe 54 de préhension lié au pignon 74-1 aval, puis d'immobiliser cet organe 54 de préhension jusqu'à ce que le pignon 74 aval ne soit plus en prise avec son brin 76A actif. L'organe 54 de préhension lié au pignon 74-1 aval est ainsi immobilisé dans sa position angulaire indexée. Pour ce faire, on applique le procédé tel que décrit en référence au premier mode de réalisation de l'invention.

Une fois cette opération réalisée, l'organe 54 de préhension lié au pignon 74-2 amont n'occupe généralement pas encore sa position angulaire indexée. Cependant, du fait du décalage longitudinal entre l'extrémité aval du brin 76A-2 actif par rapport au première brin 76A-1 actif, le pignon 74-2 amont est toujours en prise avec son brin 76A-2 actif lorsque le pignon 74-1 aval n'est plus en prise avec son brin 76A actif.

Il est donc possible de commander la vitesse de déplacement de la navette 56 vers l'aval de manière à faire tourner l'organe 54 de préhension liée au pignon 74-2 amont jusqu'à sa position angulaire indexée sans modifier la position angulaire de l'autre organe 54 de préhension. L'organe 54 de préhension lié au pignon 74-2 amont est ensuite immobilisé dans cette position angulaire indexée en commandant le déplacement de la navette 56 à la vitesse "V0" constante de référence jusqu'à ce que le pignon 74-2 amont atteigne l'extrémité aval de son brin 76A-2 actif. La navette 56 quitte alors la zone "Z2" de sortie avec les deux organes 54 de préhension arrêtés en rotation dans leur position angulaire indexée.

Pour ce faire, la portion amont 50A-2 du brin 76-2 actif lié au pignon 74-2 amont s'étend depuis l'extrémité aval du tronçon 48 de chauffage jusqu'au-delà de l'extrémité aval de l'autre brin 76-1 actif lié au pignon 74-1 aval.

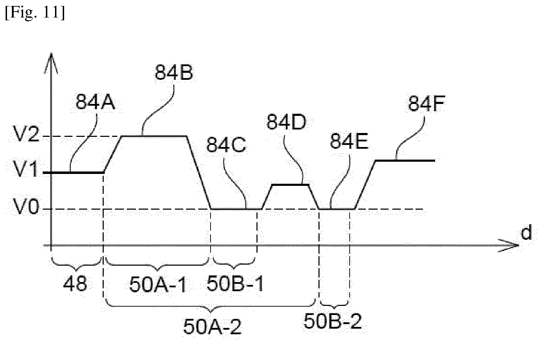

On a représenté à la [Fig.11] les variations de vitesses subies par la navette 56 dans ce deuxième mode de réalisation. Lorsque la navette 56 circule le long de la zone "Z1" de chauffage, elle circule à sa vitesse "V1" de croisière, comme indiqué par le plateau 84A. Puis, lorsque les deux pignons 74-1, 74-2 sont en prise avec leur tronçon 50 de sortie respectifs, la navette 56 est accélérée jusqu'à sa vitesse "V2" maximale pour prendre de l'avance sur la navette 56 immédiatement suivante, comme indiqué par le plateau 84B. Puis la vitesse de la navette 56 est ralentie jusqu'à sa vitesse "V0" constante de référence lorsque le pignon 74-1 aval entre dans la portion 50B-1 d'extrémité aval du brin 76A-1 actif associé afin d'arrêter la rotation des organes 54 de préhension par rapport à la navette, comme indiqué par le plateau 84C. Lorsque le pignon 74-1 aval n'est plus en prise avec son brin 76A-1 actif, le pignon 74-2 amont est toujours en prise avec la portion amont 50A-2 du tronçon 50-2 de sortie de son brin 76A-2 actif. La vitesse de la navette 56 varie alors, elle est ici accélérée mais elle pourrait être ralentie, de manière à amener l'organe 54 de préhension associé dans sa position angulaire indexée, comme indiqué par le plateau 84D. Enfin, la navette 56 est à nouveau commandée dans sa vitesse "V0" de référence pour arrêter la rotation de l'organe 54 de préhension associé au pignon 74-2 amont dans sa position angulaire indexée lorsque la liaison entre ledit pignon 74-2 amont et son brin 76-2 actif est rompue. La navette 56 sort alors de la zone "Z2" de sortie et elle peut être de nouveau accélérée sans provoquer la rotation d'organes 54 de préhension.

L'invention permet ainsi d'indexer angulairement les préformes 12 par rapport à leur navette 56 sans recourir à des moyens plus complexes en aval du tunnel 30 de chauffage.

## Revendications

1. Station (22) de chauffage de préformes (12) pour une installation de production de récipients par formage desdites préformes (12), la station (22) de chauffage comportant :
- un dispositif (28) de convoyage des préformes (12) en file d'amont en aval le long d'un trajet de convoyage, le dispositif (28) de convoyage comportant des navettes (56) indépendantes les unes des autres circulant en file sur une voie commune, chaque navette (56) comportant au moins un organe (54) de préhension d'une préforme (12) monté rotatif sur ladite navette (56) ;
- le trajet de convoyage comportant une zone (Z1) de chauffage le long de laquelle les préformes (12) sont exposées à des radiations chauffantes émises par des émetteurs (32) de chauffage, et le trajet de convoyage comportant une zone (Z2) de sortie agencée directement en aval de la zone (Z1) de chauffage, les préformes (12) se déplaçant le long de la zone (Z2) de sortie étant sensiblement hors de portée des émetteurs (32) de chauffage ;
- au moins un organe (76) flexible sans fin dont un brin (76A) actif s'étend le long du trajet de convoyage, un tronçon (48) de chauffage du brin (76A) actif étant en prise avec un pignon (74) de chaque navette (56) pour entraîner l'au moins un organe (54) de préhension associé en rotation lors de son déplacement le long de la zone (Z1) de chauffage ;
- l'organe (76) flexible sans fin tournant de manière que le brin (76A) actif se déplace vers l'aval ;
**caractérisé en ce que** le brin (76A) actif de chaque organe (76) flexible sans fin comporte un tronçon d'extrémité aval, dit tronçon (50) de sortie, qui s'étend le long de la zone (Z2) de sortie de manière à être en prise avec le pignon (74) tout au long de la zone (Z2) de sortie, de manière à pouvoir stopper la rotation de l'organe (54) de préhension dans la zone (Z2) de sortie en commandant le déplacement de la navette (56) à la même vitesse que le brin (76A) actif.

2. Station (22) de chauffage selon la revendication précédente, **caractérisée en ce que** le brin (76A) actif de l'organe (76) flexible sans fin est en prise continûment avec le pignon (74) entre une extrémité amont de la zone (Z1) de chauffage et une extrémité aval de la zone (Z2) de sortie.

3. Station (22) de chauffage selon l'une quelconque des revendications précédentes, **caractérisée en ce qu'**elle comporte deux organes (76-1, 76-2) flexibles sans fin dont les brins (76A-1, 76A-2) actifs s'étendent parallèlement, chaque brin (76A-1, 76A-2) actif comportant un tronçon (50) de sortie s'étendant dans la zone (Z2) de sortie.

4. Station (22) de chauffage selon la revendication précédente, **caractérisée en ce que** chaque navette (56) comporte deux organes (54) de préhension, chaque organe (54) de préhension étant commandé en rotation par un pignon (74-1, 74-2) associé, les pignons (74-1, 74-2) de la navette (56) étant décalés transversalement, en référence au sens de déplacement de la navette (56), l'un par rapport à l'autre, chaque pignon (74-1, 74-2) étant en prise chacun avec un brin (76A-1, 76A-2) actif associé.

5. Station (22) de chauffage selon l'une quelconque des revendications 3 ou 4, **caractérisée en ce que** l'un des pignons de la navette (56), dit pignon (74-1) aval, est décalés vers l'aval par rapport à l'autre des pignons de ladite navette (56), dit pignon (74-2) amont.

6. Station (22) de chauffage selon la revendication précédente, **caractérisée en ce qu'**une extrémité aval du brin (76A-2) actif qui coopère avec le pignon (74-2) amont est décalée vers l'aval par rapport l'extrémité aval du brin (76A-1) actif qui coopère avec le pignon (74-1) aval de sorte que le pignon (74-2) amont soit toujours en prise avec une portion (50B-2) d'extrémité aval du brin (76A-2) associé lorsque le pignon (74-1) aval n'est plus en prise avec son brin (76A-1) actif associé.

7. Procédé d'orientation des préformes (12) mettant en oeuvre la station (22) de chauffage selon la revendication 1, **caractérisé en ce que** le brin (76A) actif de chaque organe (76) flexible sans fin est commandé de manière à se déplacer à une vitesse constante, dite vitesse (V0) de référence, chaque navette (56) étant commandée de manière à se déplacer à ladite vitesse (V0) constante de référence sur une portion (50B) d'extrémité aval du brin (76A) actif associé afin de stopper la rotation de l'organe (54) de préhension pendant que le pignon (74) associé est encore en prise avec son brin (76A) actif, jusqu'à ce que le pignon (74) soit libéré de son brin (76A) actif.

8. Procédé selon la revendication précédente, **caractérisé en ce que** chaque navette (56) se déplace à une vitesse constante, dite vitesse (V1) de croisière, supérieure à la vitesse (V0) de référence le long du tronçon (48) de chauffage pour assurer une rotation régulière des organes (54) de préhension dans la zone (Z1) de chauffage.

9. Procédé selon la revendication précédente, **caractérisé en ce que** chaque navette (56) est commandée à une vitesse (V2) maximale supérieure à la vitesse (V1) de croisière lorsque son pignon (74) est en prise avec une portion (50A) amont du tronçon (50) de sortie afin d'augmenter la distance entre ladite navette (56) et la navette (56) immédiatement suivante sur la voie commune, ladite distance étant suffisante pour empêcher la navette (56) suivante de percuter la navette (56) circulant à la vitesse (V0) de référence sur la portion (50B) d'extrémité aval du tronçon (50) de sortie.

10. Procédé selon la revendication précédente, **caractérisé en ce que** la portion (50A) amont est directement adjacente à la portion (50B) d'extrémité aval du tronçon (50) de sortie.

## Patentansprüche

1. Station (22) zum Erhitzen von Vorformlingen (12) für eine Anlage zur Herstellung von Behältern durch Formen der Vorformlinge (12), wobei die Heizstation (22) Folgendes aufweist:
- eine Vorrichtung (28) zum Fördern der Vorformlinge (12) in einer Reihe von stromaufwärts nach stromabwärts entlang einer Förderbahn, wobei die Fördervorrichtung (28) voneinander unabhängige Pendelelemente (56) aufweist, die sich in einer Reihe auf einer gemeinsamen Bahn bewegen, wobei jedes Pendelelement (56) mindestens ein Organ (54) zum Greifen eines Vorformlings (12) aufweist, das drehbar auf dem Pendelelement (56) montiert ist;
- wobei die Förderbahn einen Heizbereich (Z1) aufweist, entlang dessen die Vorformlinge (12) einer durch Heizstrahler (32) emittierten Wärmestrahlung ausgesetzt werden, und wobei die Förderbahn einen Auslaufbereich (Z2) aufweist, der direkt stromabwärts des Heizbereichs (Z1) angeordnet ist, wobei sich die Vorformlinge (12), die sich entlang des Auslaufbereichs (Z2) bewegen, im Wesentlichen außerhalb der Reichweite der Heizstrahler (32) befinden;
- mindestens ein endloses flexibles Organ (76), von dem sich ein aktiver Strang (76A) entlang der Förderbahn erstreckt, wobei ein Heizabschnitt (48) des aktiven Strangs (76A) mit einem Ritzel (74) jedes Pendelelements (56) in Eingriff steht, um das mindestens eine zugehörige Greiforgan (54) bei seiner Bewegung entlang des Heizbereichs (Z1) in Drehung zu versetzen;
- wobei sich das endlose flexible Organ (76) so dreht, dass sich der aktive Strang (76A) stromabwärts bewegt; **dadurch gekennzeichnet, dass** der aktive Strang (76A) jedes endlosen flexiblen Organs (76) eine als Auslaufstrecke (50) bezeichnete stromabwärtige Endstrecke aufweist, die sich so entlang des Auslaufbereichs (Z2) erstreckt, dass sie entlang des gesamten Auslaufbereichs (Z2) mit dem Ritzel (74) in Eingriff steht, um die Drehung des Greiforgans (54) im Auslaufbereich (Z2) stoppen zu können, indem die Bewegung des Pendelelements (56) mit derselben Geschwindigkeit wie der aktive Strang (76A) gesteuert wird.

2. Heizstation (22) nach dem vorangehenden Anspruch, **dadurch gekennzeichnet, dass** der aktive Strang (76A) des endlosen flexiblen Organs (76) zwischen einem stromaufwärtigen Ende des Heizbereichs (Z1) und einem stromabwärtigen Ende des Auslaufbereichs (Z2) in kontinuierlichem Eingriff mit dem Ritzel (74) steht.

3. Heizstation (22) nach einem der vorangehenden Ansprüche, **dadurch gekennzeichnet, dass** sie zwei endlose flexible Organe (76-1, 76-2) aufweist, deren aktive Stränge (76A-1, 76A-2) sich parallel erstrecken, wobei jeder aktive Strang (76A-1, 76A-2) eine Auslaufstrecke (50) aufweist, die sich im Auslaufbereich (Z2) erstreckt.

4. Heizstation (22) nach dem vorangehenden Anspruch, **dadurch gekennzeichnet, dass** jedes Pendelelement (56) zwei Greiforgane (54) aufweist, wobei jedes Greiforgan (54) durch ein zugehöriges Ritzel (74-1, 74-2) in Drehung versetzt wird, wobei die Ritzel (74-1, 74-2) des Pendelelements (56) in Bezug auf die Bewegungsrichtung des Pendelelements (56) zueinander quer versetzt angeordnet sind, wobei jedes Ritzel (74-1, 74-2) jeweils mit einem zugehörigen aktiven Strang (76A-1, 76A-2) in Eingriff steht.

5. Heizstation (22) nach einem der Ansprüche 3 oder 4, **dadurch gekennzeichnet, dass** eines der Ritzel des Pendelelements (56), das als stromabwärtiges Ritzel (74-1) bezeichnet wird, in Bezug auf das anderer der Ritzel des Pendelelements (56), das als stromaufwärtiges Ritzel (74-2) bezeichnet wird, stromabwärts versetzt ist.

6. Heizstation (22) nach dem vorangehenden Anspruch, **dadurch gekennzeichnet, dass** ein stromabwärtiges Ende des aktiven Strangs (76A-2), das mit dem stromaufwärtigen Ritzel (74-2) zusammenwirkt, in Bezug auf das stromabwärtige Ende des aktiven Strangs (76A-1), das mit dem stromabwärtigen Ritzel (74-1) zusammenwirkt, stromabwärts versetzt ist, sodass das stromaufwärtige Ritzel (74-2) stets mit einem stromabwärtigen Endabschnitt (50B-2) des zugehörigen Strangs (76A-2) in Eingriff steht, wenn das stromabwärtige Ritzel (74-1) nicht mit seinem zugehörigen aktiven Strang (76A-1) in Eingriff steht.

7. Verfahren zur Ausrichtung von Vorformlingen (12) unter Verwendung der Heizstation (22) nach Anspruch 1, **dadurch gekennzeichnet, dass** der aktive Strang (76A) jedes endlosen flexiblen Organs (76) so gesteuert wird, dass er sich mit einer konstanten Geschwindigkeit, die als Referenzgeschwindigkeit (V0) bezeichnet wird, bewegt, wobei jedes Pendelelement (56) so gesteuert wird, dass es sich mit der konstanten Referenzgeschwindigkeit (V0) auf einem stromabwärtigen Endabschnitt (50B) des zugehörigen aktiven Strangs (76A) bewegt, um die Drehung des Greiforgans (54) zu stoppen, während das zugehörige Ritzel (74) noch mit seinem aktiven Strang (76A) in Eingriff steht, bis das Ritzel (74) von seinem aktiven Strang (76A) gelöst ist.

8. Verfahren nach dem vorangehenden Anspruch, **dadurch gekennzeichnet, dass** sich jedes Pendelelement (56) mit einer konstanten Geschwindigkeit, die als Dauergeschwindigkeit (V1) bezeichnet wird und höher als die Referenzgeschwindigkeit (V0) ist, entlang des Heizabschnitts (48) bewegt, um eine gleichmäßige Drehung der Greiforgane (54) im Heizbereich (Z1) zu gewährleisten.

9. Verfahren nach dem vorangehenden Anspruch, **dadurch gekennzeichnet, dass** jedes Pendelelement (56) mit einer Maximalgeschwindigkeit (V2) gesteuert wird, die höher als die Dauergeschwindigkeit ist (V1), wenn sein Ritzel (74) mit einem stromaufwärtigen Abschnitt (50A) der Auslaufstrecke (50) in Eingriff steht, um den Abstand zwischen dem Pendelelement (56) und dem auf der gemeinsamen Bahn unmittelbar folgenden Pendelelement (56) zu vergrößern, wobei der Abstand groß genug ist, um zu verhindern, dass das nachfolgende Pendelelement (56) mit dem Pendelelement (56), das sich mit der Referenzgeschwindigkeit (V0) auf dem stromabwärtigen Endabschnitt (50B) der Auslaufstrecke (50) bewegt, kollidiert.

10. Verfahren nach dem vorangehenden Anspruch, **dadurch gekennzeichnet, dass** der stromaufwärtige Abschnitt (50A) direkt an den stromabwärtigen Endabschnitt (50B) der Auslaufstrecke (50) angrenzt.

## Claims

1. Station (22) for heating preforms (12) for an installation for producing containers by forming said preforms (12), the heating station (22) having:
- a device (28) for conveying the preforms (12) in a line from upstream to downstream along a conveying path, the conveying device (28) having shuttles (56) that are independent of one another circulating in a line on a common track, each shuttle (56) having at least one member (54) for gripping a preform (12) that is mounted so as to rotate on said shuttle (56);
- the conveying path having a heating zone (Z1) along which the preforms (12) are exposed to heating radiation emitted by heating emitters (32), and the conveying path having an output zone (Z2) arranged directly downstream of the heating zone (Z1), the preforms (12) moving along the output zone (Z2) being substantially out of range of the heating emitters (32);
- at least one endless flexible member (76) of which an active strand (76A) extends along the conveying path, a heating section (48) of the active strand (76A) being engaged with a pinion (74) of each shuttle (56) so as to drive the at least one associated gripping member (54) in rotation during its movement along the heating zone (Z1) ;
- the endless flexible member (76) rotating such that the active strand (76A) moves downstream;
**characterized in that** the active strand (76A) of each endless flexible member (76) has a downstream end section, referred to as output section (50), which extends along the output zone (Z2) so as to be engaged with the pinion (74) all along the output zone (Z2), so as to be able to stop the rotation of the gripping member (54) in the output zone (Z2) by controlling the movement of the shuttle (56) at the same speed as the active strand (76A) .

2. Heating station (22) according to the preceding claim, **characterized in that** the active strand (76A) of the endless flexible member (76) is engaged continuously with the pinion (74) between an upstream end of the heating zone (Z1) and a downstream end of the output zone (Z2) .

3. Heating station (22) according to either one of the preceding claims, **characterized in that** it has two endless flexible members (76-1, 76-2) of which the active strands (76A-1, 76A-2) extend in parallel, each active strand (76A-1, 76A-2) having an output section (50) extending in the output zone (Z2).

4. Heating station (22) according to the preceding claim, **characterized in that** each shuttle (56) has two gripping members (54), each gripping member (54) being controlled in rotation by an associated pinion (74-1, 74-2), the pinions (74-1, 74-2) of the shuttle (56) being offset transversely, with reference to the direction of movement of the shuttle (56), with respect to one another, each pinion (74-1, 74-2) being engaged with an associated active strand (76A-1, 76A-2).

5. Heating station (22) according to either one of Claims 3 and 4, **characterized in that** one of the pinions of the shuttle (56), referred to as downstream pinion (74-1), is offset downstream with respect to the other of the pinions of said shuttle (56), referred to as upstream pinion (74-2).

6. Heating station (22) according to the preceding claim, **characterized in that** a downstream end of the active strand (76A-2) that cooperates with the upstream pinion (74-2) is offset downstream with respect to the downstream end of the active strand (76A-1) that cooperates with the downstream pinion (74-1) such that the upstream pinion (74-2) is still engaged with a downstream end portion (50B-2) of the associated strand (76A-2) when the downstream pinion (74-1) is no longer engaged with its associated active strand (76A-1).

7. Method for orienting the preforms (12), implementing the heating station (22) according to Claim 1, **characterized in that** the active strand (76A) of each endless flexible member (76) is controlled so as to move at a constant speed, referred to as reference speed (V0), each shuttle (56) being controlled so as to move at said constant reference speed (V0) over a downstream end portion (50B) of the associated active strand (76A) in order to stop the rotation of the gripping member (54) while the associated pinion (74) is still engaged with its active strand (76A), until the pinion (74) is released from its active strand (76A).

8. Method according to the preceding claim, **characterized in that** each shuttle (56) moves at a constant speed, referred to as cruising speed (V1), higher than the reference speed (V0) along the heating section (48) so as to ensure regular rotation of the gripping members (54) in the heating zone (Z1).

9. Method according to the preceding claim, **characterized in that** each shuttle (56) is controlled at a maximum speed (V2) higher than the cruising speed (V1) when its pinion (74) is engaged with an upstream portion (50A) of the output section (50) in order to increase the distance between said shuttle (56) and the shuttle (56) that immediately follows on the common track, said distance being sufficient to prevent the following shuttle (56) from striking the shuttle (56) circulating at the reference speed (V0) on the downstream end portion (50B) of the output section (50).

10. Method according to the preceding claim, **characterized in that** the upstream portion (50A) is directly adjacent to the downstream end portion (50B) of the output section (50).
